# FASCICULE DE BREVET EUROPEEN

(11) **EP 2 817 152 B1**
(45) Date de publication et mention de la délivrance du brevet: **31.10.2018**
(21) Numéro de dépôt: 13710507.8
(22) Date de dépôt: 22.02.2013
(51) Int. Cl.: B32B 17/10, C08K 5/00, G02B 27/01, C08J 5/18

(54) **FEUILLET THERMOPLASTIQUE POUR SYSTEME DE VISUALISATION TETE HAUTE**
THERMOPLASTISCHE FOLIE FÜR EIN HEAD-UP-ANZEIGESYSTEM
THERMOPLASTIC SHEET FOR A HEADS-UP DISPLAY SYSTEM

(30) Priorité: 24.02.2012 FR 1251718
(43) Date de publication de la demande: 31.12.2014
(73) Titulaire: Sekisui Chemical Co., Ltd., Osaka-shi, Osaka 530-8565 (JP)
(72) Inventeur: SABLAYROLLES, Jean, 71530 Sassenay (FR); CLABAU, Frédéric, 75013 Paris (FR); LABROT, Michael, 52072 Aachen (DE)
(74) Mandataire: Ter Meer Steinmeister & Partner
(86) Numéro de dépôt international: PCT/FR2013/050369
(87) Numéro de publication internationale: WO 2013/124596

(56) Documents cités:
- EP-A1- 0 517 114
- EP-A2- 0 396 349
- WO-A1-99/61243
- US-A- 5 618 863
- US-A1- 2006 183 833
- US-B2- 6 979 499

## Description

La présente invention se rapporte au domaine des systèmes de visualisation utilisant des écrans transparents, en particulier les pare-brises automobile ou les vitrages pour bâtiment.

Tout particulièrement, même si elle n'y est pas limitée, la présente invention se rapporte au domaine des systèmes de visualisation dits tête haute, appelés HUD ou Head Up Display dans la technique. De tels systèmes sont utiles notamment dans les cockpits d'avion, les trains mais également aujourd'hui dans les véhicules automobiles des particuliers (voitures, camions, etc.). Ces systèmes permettent notamment d'informer le conducteur du véhicule sans que celui-ci n'éloigne son regard du champ de vision en avant du véhicule, ce qui permet d'accroître grandement la sécurité. Selon un autre mode possible d'utilisation, les vitrages selon l'invention peuvent également être utilisés en tant que vitrines transparentes ou translucides permettant la visualisation d'informations.

Dans les systèmes HUD classiques, on projette des informations sur un vitrage non-totalement transparent, ces informations se réfléchissant vers le conducteur ou l'observateur. Le conducteur perçoit une image virtuelle qui se situe à une certaine distance derrière le pare-brise.

De la manière la plus classique, on obtient une telle image en projetant une information sur un pare-brise ayant une structure feuilletée, c'est à dire formée de deux feuilles de verre et d'un intercalaire en matière plastique comprenant ou constitué le plus souvent par du polyvinylbutyral (PVB). Cependant le conducteur observe alors une image double : une première image réfléchie par la surface du pare-brise orientée vers l'intérieur de l'habitable et une seconde image réfléchie par la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à l'image provenant de la même source et réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle.

Alternativement, il est proposé dans le brevet US 6,979,499 B2 d'envoyer un faisceau électromagnétique de longueur d'onde appropriée, en particulier dans le proche UV voire même dans le visible, sur des luminophores directement intégrés dans le vitrage, susceptibles de répondre à l'excitation par l'émission d'une radiation lumineuse dans le domaine visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel des luminophores sont incorporés. Les luminophores sont choisis en fonction de la longueur d'onde du rayonnement d'excitation incident. Cette longueur d'onde peut être dans le domaine de l'ultraviolet, en particulier entre 300 et 400 nm. Les luminophores, sous cette radiation incidente, émettent un rayonnement dans le domaine du visible. Une telle construction permet selon ce document de restituer directement sur le pare-brise ou le vitrage une image de n'importe quel objet. Selon cette divulgation, des produits luminophores sont déposés sur l'ensemble d'une surface principale d'un des feuillets constituant le vitrage feuilleté (PVB ou verre) sous la forme d'une couche continue. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs.

Pour obtenir une luminance suffisante de l'information générée, il est souvent nécessaire d'utiliser des sources excitatrices générant une lumière concentrée telles que des diodes laser. Par concentré, il est entendu au sens de la présente description que la puissance surfacique, au niveau du vitrage, du faisceau issu de la source génératrice est supérieure à 120 mW.cm⁻² et de préférence comprise entre 200 mw.cm⁻² et 20 000 mW.cm⁻², voire comprise entre 500 mw.cm⁻² et 10 000 mw.cm⁻². L'utilisation de telles sources comporte cependant des dangers liés à la puissance et à la longueur d'onde du faisceau, notamment à l'extérieur du véhicule. En particulier, en travaillant avec un faisceau d'excitation générant une forte concentration de radiations dans le domaine UV, il est nécessaire que le vitrage absorbe fortement le rayonnement UV pour éviter les fuites dudit rayonnement vers l'extérieur.

Un autre problème primordial lié à l'utilisation des sources concentrées concerne le luminophore utilisé, qui ne doit pas se dégrader sous le rayonnement UV extérieur ni sous le rayonnement concentré incident, ceci afin d'assurer à la fonction de visualisation une durée de vie convenable.

EP 0 517 114 B1 divulgue un verre feuilleté composé de plaques de verre, entre lesquelles une résine thermodurcissable composée d'un copolymère d'éthylène-acétate de vinyle, d'une résine hydrocarbonée et d'un peroxyde organique est insérée et durcie.

EP 0 396 349 A2 divulgue un verre ayant une capacité élevée d'absorption des rayons ultraviolets produit en interposant une résine thermodurcissable entre deux plaques de verre pour former une structure monolithique et thermodurcissable la couche de résine, laquelle résine thermodurcissable utilisant un composé de benzophénone ou de benzotriazole comme agent absorbant les rayons ultraviolets. Les impératifs de luminance et de transparence orientent vers une solution dans laquelle les luminophores soient préférentiellement organiques. En effet, les expériences effectuées par la société déposante montrent que les particules luminophores inorganiques conduisent soit à une trop grande diffusion lumineuse (si leur taille est trop importante), soit à des rendements de luminescence faibles (si leur taille est trop faible).

Selon un aspect à prendre en considération, plus particulièrement dans le cas d'une utilisation du vitrage dans le domaine automobile, il est connu que les UV contenus dans le rayonnement solaire peuvent entraîner la dégradation rapide des matières plastiques utilisées dans l'habitacle (tableau de bord, portières etc..) voire légèrement du PVB. Pour pallier à ce phénomène, il est courant d'incorporer dans la matière plastique, le plus souvent le PVB, des composés organiques qui absorbent à la fois les UV-A (radiations de longueur d'onde comprise entre 280 et 320 nm) et les UV-B (radiations de longueur d'onde comprise entre 320 et 400 nm) du rayonnement solaire incident. Les molécules insérées sont généralement des molécules de la famille des benzotriazoles. De tels produits sont actuellement commercialisés sous les références Tinuvin 326® ou Tinuvin 328® ou encore Songsorb 3280®.

Le problème posé par la présence de ces composés dits « anti-UV» est la compétition qu'ils peuvent occasionner avec les luminophores dans l'absorption du rayonnement concentré d'excitation. En effet, si la source d'excitation est choisie dans ou très proche du domaine UV, les luminophores ainsi que les composés anti-UV vont tous les deux absorber ce rayonnement incident. Ceci a pour conséquence de priver les luminophores d'une partie de leur source d'excitation, et ainsi d'abaisser la luminance finale mesurée sur le vitrage. En particulier, les inventeurs ont pu constater que des vitrages dans lesquels le feuillet thermoplastique était dépourvu de telles molécules anti-UV présentaient des luminances significativement supérieures.

On note cependant que pour les raisons de protection du PVB et des matières plastiques dures expliquées précédemment, la suppression totale de ces composés anti-UV ne peut être envisagée, en particulier dans des applications du type pare-brise.

L'objet de la présente invention est donc de fournir une solution aux problèmes précédemment exposés. En particulier, l'objet de la présente invention est de fournir un vitrage incorporant un feuillet intercalaire thermoplastique apte à absorber la quasi-totalité les UV-A et B du rayonnement solaire et dont la luminance sous excitation électromagnétique, que cette dernière soit dans le domaine du proche UV ou même du visible, est suffisante pour permettre la visualisation d'informations :
- par le conducteur du véhicule si le vitrage est utilisé comme pare-brise ou
- par un observateur extérieur si le vitrage est utilisé notamment comme vitrine, en particulier en vision diurne.

Un tel résultat a pu être obtenu selon l'invention par une sélection appropriée des différents éléments constituant le vitrage selon l'invention.

Plus précisément, la présente invention se rapporte selon un premier aspect à un feuillet pour la fabrication d'un vitrage transparent automobile ou de bâtiment destiné à la visualisation d'information, notamment d'un vitrage feuilleté, ledit feuillet étant constitué par une matière thermoplastique comprenant un composé et présentant une bande d'absorption dans le domaine des ultraviolets. Le spectre de réflexion diffuse dudit composé, tel que mesuré en fonction de l'énergie d'un rayonnement incident variant par exemple entre 2 et 4,5 eV, est caractérisé par une valeur V sur la courbe de réflexion, déterminée par le point d'intersection entre la tangente au point d'inflexion de ladite courbe et son asymptote aux énergies plus élevées, cette valeur V étant comprise entre 3,06 et 3,65 eV.

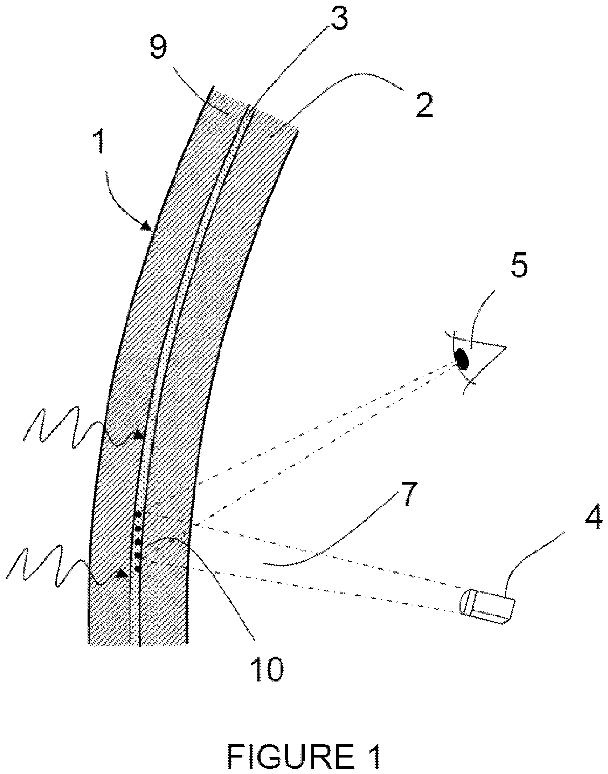

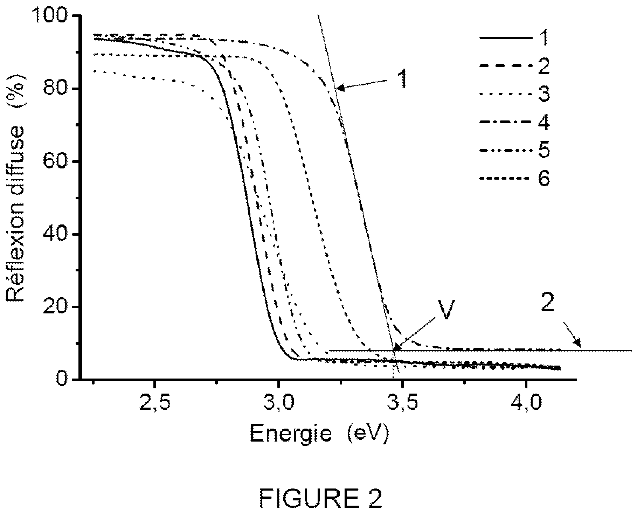

Par le terme « asymptote aux énergies plus élevées », comme il est indiqué sur la figure 2, on entend la droite tangente à la courbe de réflexion pour les valeurs de l'énergie très supérieures à la valeur V, par exemple celles supérieures à 3,75 eV, et pour lesquelles la réflexion atteint sensiblement son minimum.

Selon l'invention, le spectre de réflexion diffuse est directement mesuré sur les poudres commerciales du composé.

Selon des modes préférés de réalisation de l'invention, qui peuvent bien évidemment être combinés entre eux :
- La valeur V est comprise entre 3,14 et 3,50 eV.
- Le feuillet thermoplastique présente une absorbance intégrée entre 310 et 340 nm supérieure à 98%, de préférence supérieure à 99%.
- La matière thermoplastique est choisie dans le groupe des PVB, des PVC plastifiés, du polyuréthane PU ou des éthylènes vinyle acétate EVA, en particulier la matière plastique est un PolyVinyl Butyral (PVB).
- Ledit composé est choisi dans le groupe constitué par : le 2-hydroxy-4-octyloxy benzophenone, l'éthanediamide N-(2-ethoxyphenyl)-N'-(2-ethylphenyl), le 2-(2H-benzotriazol-2-yl)-p-cresol.
- L'épaisseur du feuillet thermoplastique est comprise entre 300 et 1600 micromètres, de préférence est comprise entre 300 et 800 micromètres.
L'invention se rapporte en particulier à un feuillet tel que précédemment décrit, et comprenant en outre un matériau luminophore intégré dans ladite feuille, ledit luminophore absorbant des radiations incidentes d'excitation émises entre 300 et 420 nm, et restituant après ladite excitation une radiation dans le domaine visible. De préférence, lequel ledit luminophore est un hydroxytéréphthalate, notamment un hydroxyalkyltéréphthalate ROOC-Φ(OH)ₓ-COOR, de formule développée : 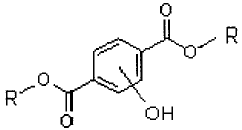 dans laquelle Φ désigne un noyau benzénique substitué par au moins un groupement hydroxy (OH), R est une chaine hydrocarbonée comprenant de 1 à 10 atomes de Carbone et x est égal à 1 ou 2.

Selon un mode particulièrement avantageux, ledit luminophore est un dialkyl 2-5 dihydroxytéréphthalate répondant à la formule développée suivante :

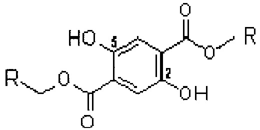

Selon l'invention, le feuillet thermoplastique peut également comprendre en outre un additif donneur de H°, en particulier choisi dans le groupe constitué par les phénylamines, les diphénylamines, les diamines.

L'invention se rapporte également à un vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire comprenant au moins une feuille thermoplastique tel que précédemment décrit.

Enfin, l'invention se rapporte à un dispositif de visualisation d'une image sur un vitrage transparent, comprenant le vitrage feuilleté précédent et une source génératrice de rayonnement électromagnétique concentré du type laser dont le rayonnement est compris entre 350 et 410 nm, le rayonnement étant dirigé vers la ou les zones du vitrage comprenant la couche de luminophore.

Dans un tel dispositif de visualisation, la source génératrice de rayonnement électromagnétique comprend typiquement au moins une diode laser émettant un rayonnement d'excitation dont la longueur d'onde est inférieure à 410 nm et de préférence est comprise entre 350 et 405 nm.

De préférence, le dispositif de visualisation comprend en outre des moyens de modulation de la puissance de la source génératrice de rayonnement notamment afin d'adapter la luminance aux conditions d'éclairage extérieur du vitrage, par exemple en fonction des conditions d'ensoleillement du vitrage.

Par exemple les moyens de modulations peuvent définir au moins une puissance convenant pour une utilisation de jour et au moins une puissance inférieure à la précédente et convenant pour une utilisation de nuit.

L'invention se rapporte en outre à un procédé de fabrication d'un vitrage feuilleté selon l'une des réalisations précédentes, selon lequel on insère les luminophores dans le feuillet thermoplastique du type PVB via un procédé d'extrusion ou bien on les dépose sur le feuillet thermoplastique par une technique de dépôt en solution choisie parmi le spray, la sérigraphie, l'enduction laminaire, le rouleau, le jet d'encre ou encore les techniques du type offset, flexogravure ou encore héliogravure, puis on effectue le feuilletage du vitrage sous autoclave.

L'invention et ses avantages seront mieux compris à la lecture du mode de réalisation de l'invention qui suit, en relation avec la figure unique jointe.

La figure jointe permet d'illustrer l'invention et ses avantages :
Sur cette figure, on a schématisé un pare-brise et un dispositif selon l'invention :
Le pare-brise 1 se compose de deux feuilles 2 et 9 typiquement en verre mais qui pourraient également être constituées de matière plastique résistante du type polycarbonate. Entre les deux feuillets, est présent un feuillet intercalaire plastique 3 tel que du PVB (polyvinylbutyral), du PVC plastifié, du PU ou de l'EVA ou bien encore un intercalaire thermoplastique multicouche incorporant par exemple du PET (polyéthylène téréphtalate), dont la succession des couches est par exemple PVB/PET/PVB.

Au moins une des feuilles thermoplastiques composant l'intercalaire 3 a été remplie ou imbibée sur au moins une de ses faces avant feuilletage, c'est-à-dire avant l'assemblage des différents feuillets, de luminophore organique notamment du type téréphtalate, d'un composé absorbant spécifiquement les UV selon l'invention, et éventuellement d'un additif protecteur du type donneur de radicaux H°.

Une source laser 4 émettant un rayonnement d'excitation est utilisée pour envoyer un rayonnement concentré incident 7 de longueur d'onde proche de 400 nm. La longueur d'onde est généralement ajustée de telle façon que le luminophore 10, solvaté sous forme moléculaire dans le feuillet thermoplastique intercalaire 3, présente un fort coefficient d'absorption du rayonnement incident. Il réémet ensuite un rayonnement dans le domaine visible.

Le rayonnement visible émis par le luminophore est alors directement observable par l'oeil 5 du conducteur, qui visualise ainsi l'objet sur le pare-brise sans avoir à quitter la route des yeux. De cette façon, une image peut être directement matérialisée sur un pare-brise feuilleté sans nécessité d'adapter la structure de celui-ci, par exemple l'épaisseur du feuillet intercalaire, ce qui permet une fabrication économique des systèmes HUD.

La source utilisée pour générer le rayonnement concentré est par exemple mais non limitativement du type laser à solide, diode laser à semi-conducteurs, laser à gaz, laser à colorant, laser à excimère. De manière générale toute source connue générant un flux concentré et dirigé, au sens de la présente invention, d'un rayonnement électromagnétique peut être utilisée comme source d'excitation selon l'invention.

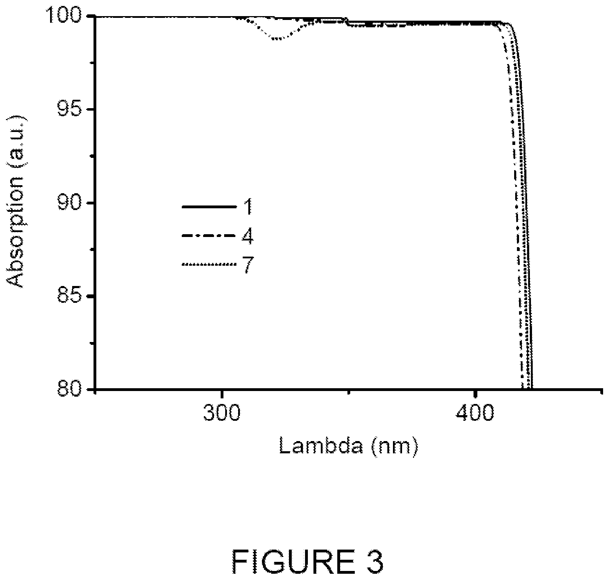

Selon un mode de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation un dispositif tel que décrit dans la demande US2004/0232826, notamment tel que décrit en connexion avec la figure 3.

En complément des projecteurs DLP, qui fonctionnent avec une matrice de micro-miroirs, des projecteurs utilisant la technologie MEMS (Micro-Electro-Mechanical Systems) notamment avec déviation du faisceau incident (notamment laser) au moyen d'un seul miroir peuvent également être utilisés selon l'invention.

Le luminophore, le composé absorbant spécifiquement les UV selon l'invention et le cas échéant un additif protecteur du type donneur de radicaux H° peuvent être insérés dans le feuillet PVB lors de son extrusion.

Selon une autre voie possible, ils peuvent être déposés sur le feuillet PVB par des techniques de pulvérisation (spray), de sérigraphie, par des techniques du type jet d'encre ou encore par des techniques du type offset, flexogravure ou héliogravure.

Il est apparu que les luminophores, le composé absorbant spécifiquement les UV et l'additif protecteur, tous trois de nature organique, pouvaient ainsi être incorporés dans le feuillet plastique PVB de façon suffisamment intime pour que leur présence ne puisse plus être détectée par les techniques classiques de microscopie lumineuse. Sans que cela puisse être interprété comme une quelconque théorie, une explication possible serait que les molécules organiques additionnées à la matière plastique sont entièrement solvatées dans le feuillet PVB après passage en autoclave, c'est-à-dire qu'elles s'y retrouvent au final sous forme de molécules individualisées dans la matière plastique.

Certainement en raison de ce phénomène, il a été trouvé par le demandeur que dans le cadre d'une application de visualisation d'une image au travers d'un vitrage transparent, l'utilisation de luminophores, par exemple du type hydroxytéréphthalate, tel que décrit dans la demande WO2010/139889, permet de répondre efficacement aux impératifs suivants, nécessaires à une telle application :
a) une netteté de l'image acceptable,
b) un flou, engendré par l'apposition de la couche sur le pare-brise, mesuré selon la norme Ansi Z26.1 1996, inférieur à 2% voire même inférieur à 1%,
c) une transmission lumineuse supérieure à 70% et de préférence supérieure à 75%,
d) des propriétés de durabilité au rayonnement UV solaire incident et au rayonnement d'excitation, notamment laser, suffisantes,
e) une intensité de luminescence suffisante pour qu'elle soit observable par le conducteur, en particulier en vision diurne.

En particulier, concernant le point e), le choix spécifique d'un composé additionnel présentant les caractéristiques spécifiques d'absorption des UV décrites précédemment permet une amélioration sensible des performances de luminance du vitrage, tel qu'illustré par les exemples ci-dessous.

Le mode de réalisation qui précède n'est bien évidemment en aucune façon limitatif de la présente invention, sous aucun des aspects précédemment décrits.

### Exemples :

Les exemples qui suivent permettent d'illustrer un exemple de réalisation d'un pare-brise feuilleté comprenant le luminophore selon l'invention et ses avantages:
On a d'abord synthétisé un pare-brise feuilleté, comprenant la succession de deux feuilles de verre reliées par un feuillet intercalaire de PVB d'épaisseur 760 microns ne contenant pas de produits absorbant dans l'UV autres que le PVB. L'assemblage est réalisé selon les techniques bien connues de l'art.

Préalablement au feuilletage, selon un carré de dimensions environ 10 x 10 cm², une couche de luminophore est déposée. Le luminophore est le diéthyl(2,5-dihydroxy)téréphtalate décrit dans la demande WO2010/139889. Le luminophore est déposé par une technique de sérigraphie classique sur la face intérieure de la feuille de verre 2, c'est-à-dire sur la face tournée vers le feuillet PVB avant l'étape d'assemblage (voir figure). Sans sortir du cadre de l'invention, le luminophore peut également être déposé sur la face intérieure du PVB ou incorporé dans la feuille de PVB par extrusion.

Plus précisément, on réalise au préalable, dans un solvant du type THF contenant un liant de type PVB, une dilution du luminophore en mélange avec différents composés absorbant sélectivement les UV. La dilution est ajustée pour l'obtention finale d'une concentration en luminophore de 0,5% et du composé absorbant les UV de 0,1% par rapport à la masse totale de PVB.

Les mélanges sont ensuite sérigraphiés, selon les techniques classiques, sur la feuille de verre. L'épaisseur de la couche initiale déposée par sérigraphie et incorporant le luminophore et le composé additionnel dans le mélange PVB, est d'environ 10 à 40 microns.

On laisse ensuite le solvant s'évaporer, puis le feuilletage est réalisé avec les deux feuilles de verre et le feuillet PVB selon les techniques en autoclave classiques dans le domaine. On obtient ainsi un pare-brise tel que décrit sur la figure.

On obtient ainsi différents vitrages dans lequel on a inséré les différents composés additionnels reportés dans le tableau 1 ci-dessous. Les échantillons 1 et 2 représentent l'art antérieur, tandis que les échantillons 3 à 6 représentent l'invention. Un échantillon comparatif est également fabriqué (exemple 7), dans lequel seul le luminophore est incorporé dans le vitrage.

On a mesuré les paramètres caractéristiques des systèmes selon les protocoles suivants :
Le flou a été mesuré selon la norme automobile Ansi Z26.1 (1996).

La luminance des vitrages sous l'effet d'un rayonnement issu d'une diode laser d'excitation a été mesurée selon la méthode suivante : on a dirigé le faisceau directement sur la partie du vitrage comprenant la couche de luminophore, sur une surface d'environ 2 mm². Un luminance-mètre est dirigée vers le spot de lumière émis et on mesure en continu la luminance en cd/m².

On mesure la luminance initiale du rayonnement d'émission, une luminance de l'ordre de plusieurs centaines de cd/m² étant jugée suffisante pour que le spot soit parfaitement visible du conducteur regardant la route dans des conditions normales d'ensoleillement, tel que décrit précédemment. Cette luminance est rapportée à celle mesurée pour le vitrage selon l'exemple 7 de référence.

La durabilité aux rayonnements UV solaires incidents a été mesurée avec le test Arizona ® qui consiste à exposer le vitrage en continu à une radiation émise par une lampe à arc au Xénon pour simuler le rayonnement solaire selon la norme ISO 4892 (partie 2) à une température de 90°C. La durabilité est définie comme le temps nécessaire pour que la luminance initiale soit réduite de moitié.

Les mesures d'absorption UV-visible ont été réalisées sur spectromètre Hach Lange DR5000. Sur la figure 2, on a reporté les spectres des feuillets selon les exemples 1 (selon l'art antérieur), 4 (selon l'invention) et 7 (de référence). On peut voir qu'en l'absence de composé additionnel absorbant les UV, une partie du rayonnement incident UV n'est pas absorbée par le feuillet. Au contraire, pour les feuillets selon les exemples 1 et 4, tout le rayonnement UV incident est absorbé par le feuillet.Les spectres de réflexion diffuse des composés absorbant sélectivement les UV ont été obtenus selon les techniques classiques avec les poudres de ces composés placées dans un spectrophotomètre Cary Varian 5G équipé d'une sphère d'intégration recouverte de spectralon. Sur la figure 3, on a reporté les mesures de ces spectres d'absorption UV-visible en fonction de l'énergie du rayonnement incident. On peut voir que la valeur V en laquelle se coupent les tangentes au point d'inflexion et aux hautes énergies est très différente en fonction de la nature chimique dudit composé : elle est mesurée en-dessous de 3,06 eV pour les échantillons 1 et 2 (selon l'art antérieur) et au-dessus de 3,06 eV pour les échantillons 3 à 6 (selon l'invention).

**Tableau 1**

| Exemple | 1 | 2 | 3 | 4 | 5 | 6 | 7 (ref) |
|---|---|---|---|---|---|---|---|
| Composé absorbant les UV | Tinuvin 326 | Songsorb3280 | UV531 | Tinuvin 312 | Milestab P | Uvinul3035 | Aucun |
| valeur V (eV) | 2,98 | 3,03 | 3,15 | 3,47 | 3,08 | 3,30 | NA |
| Luminance relative (rapportée à celle de l'échantillon 7) | 0,62 | 0,9 | 1 | 1 | 1 | 1 | 1 |
| Pourcentage du rayonnement UV incident absorbé à 327 nm | 100 | 100 | 100 | 100 | 100 | 100 | 96 |
| Durabilité sous rayonnement UV (test Arizona) | > 1500h | > 1500h | > 1500h | > 1500h | > 1500h | ∼ 1500h | > 1500h |
| Flou (%) (Ansi Z26.1 (1996)) | < 1 | < 1 | < 1 | < 1 | < 1 | < 1 | < 1 |

Avec :
Tinuvin 326® : 2-(5-chloro-2H-benzotriazol-2-yl)-6-(1,1-dimethylethyl)-4-methylphenol
Songsorb 3280® : 2-(2'-hydroxy-3',5'-di-t-amylphenyl)benzotriazole
UV531® : 2-hydroxy-4-octyloxy benzophenone
Tinuvin 312® : ethanediamide, N-(2-ethoxyphenyl)-N'-(2-ethylphenyl)
Milestab P® : 2-(2H-benzotriazol-2-yl)-p-cresol
Uvinul3035 ® : ethyl-2-cyano-3,3-diphenyl acrylate.

Les résultats reportés dans le tableau 1 montrent que le vitrage selon l'exemple 7 présente la valeur de luminance la plus élevée, en l'absence de composé additionnel absorbant les UV. Cependant les données reportées dans le tableau 1 montrent qu'un tel vitrage ne peut être utilisé selon les normes actuellement en vigueur notamment dans le domaine automobile : seulement 96% du rayonnement UV à 327 nm (3,79 eV) est absorbé par le vitrage. Une telle caractéristique peut entraîner sur la durée une dégradation des matières plastiques comme décrit précédemment.

Les échantillons selon les exemples 1 et 2, incorporant les composés absorbant les UV traditionnellement utilisés dans le domaine automobile, absorbent la totalité des UV incidents. Cependant, on observe des luminances relativement faibles de ces vitrages lorsqu'ils sont utilisés pour la visualisation d'informations.

Les données reportées dans le tableau 1 qui précède indiquent clairement que l'utilisation de composés absorbant sélectivement les UV selon l'invention permet d'obtenir tout à la fois un vitrage présentant une parfaite protection de l'habitacle contre le rayonnement UV issu du rayonnement solaire et un fort rendement de luminescence sous excitation UV.

## Revendications

1. Feuillet thermoplastique pour la fabrication d'un vitrage transparent automobile ou de bâtiment destiné à la visualisation d'information, notamment d'un vitrage feuilleté, ledit feuillet étant **caractérisé en ce qu'**il comprend un composé présentant une bande d'absorption dans le domaine des ultraviolets,
le spectre de réflexion diffuse en fonction de l'énergie du rayonnement incident dudit composé étant **caractérisé par** une valeur V sur la courbe de réflexion, déterminée par le point d'intersection entre la tangente (1) au point d'inflexion de ladite courbe et son asymptote (2) aux énergies plus élevées, comprise entre 3,06 et 3,65 eV, l'asymptote aux énergies plus élevées étant la droite tangente à la courbe de réflexion pour des valeurs de l'énergie très supérieures à la valeur V et pour lesquelles la réflexion atteint sensiblement son minimum,
dans lequel la matière thermoplastique est choisie dans le groupe des PVB, des PVC plastifiés, du polyuréthane PU ou des éthylènes vinyle acétate EVA,
ledit feuillet comprenant en outre un matériau luminophore intégré dans ladite feuille, ledit luminophore absorbant des radiations incidentes d'excitation émises entre 300 et 420 nm, et restituant après ladite excitation une radiation dans le domaine visible,
dans lequel le spectre de réflexion diffuse est directement mesuré sur des poudres commerciales du composé utilisant un spectrophotomètre Cary Varian 5G équipé d'une sphère d'intégration recouverte de spectralon.

2. Feuillet thermoplastique selon la revendication 1, dans lequel la valeur V est comprise entre 3,14 et 3,50 eV.

3. Feuillet thermoplastique selon l'une des revendications précédentes, présentant une absorbance intégrée entre 310 et 340 nm supérieure à 98%, de préférence supérieure à 99%.

4. Feuillet thermoplastique selon l'une des revendications précédentes, dans lequel la matière plastique est un PolyVinyl Butyral (PVB).

5. Feuillet thermoplastique selon l'une des revendications précédentes, dans lequel ledit composé est choisi dans le groupe constitué par : le 2-hydroxy-4-octyloxy benzophenone, l'éthanediamide N-(2-ethoxyphenyl)-N'-(2-ethylphenyl), le 2-(2H-benzotriazol-2-yl)-p-cresol.

6. Feuillet thermoplastique selon l'une des revendications précédentes, d'épaisseur comprise entre 300 et 1600 micromètres, de préférence compris entre 300 et 800 micromètres.

7. Feuillet thermoplastique selon la revendication précédente, dans lequel ledit luminophore est un hydroxytéréphthalate.

8. Feuillet thermoplastique selon la revendication précédente, dans lequel ledit luminophore est un hydroxyalkyltéréphthalate ROOC-Φ(OH)ₓ-COOR, de formule développée: 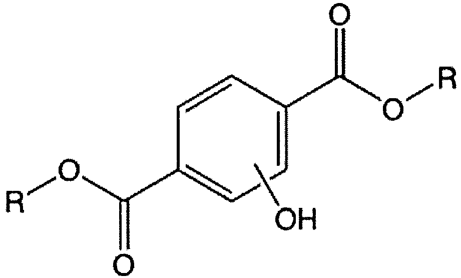 dans laquelle Φ désigne un noyau benzénique substitué par au moins un groupement hydroxy (OH), R est une chaîne hydrocarbonée comprenant de 1 à 10 atomes de Carbone et x est égal à 1 ou 2.

9. Feuillet thermoplastique selon la revendication précédente, dans lequel ledit luminophore est un dialkyl 2-5 dihydroxytéréphthalate répondant à la formule développée :

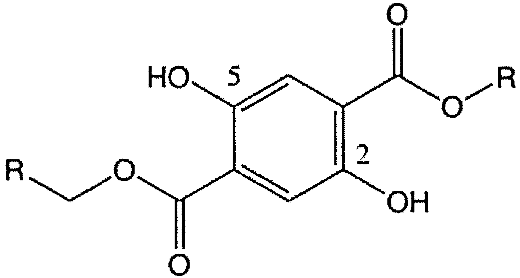

10. Feuillet thermoplastique selon l'une des revendications précédentes comprenant en outre un additif donneur de radicaux H°.

11. Feuillet thermoplastique selon la revendication précédente, dans lequel l'additif donneur de radicaux H° est choisi dans le groupe constitué par les phénylamines, les diphénylamines, les diamines.

12. Vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire comprenant au moins une feuille thermoplastique selon l'une des revendications 1 à 11.

13. Dispositif de visualisation d'une image sur un vitrage transparent, comprenant un vitrage feuilleté selon la revendication précédente et une source génératrice de rayonnement électromagnétique concentré du type laser dont le rayonnement est compris entre 350 et 410 nm, le rayonnement étant dirigé vers la ou les zones du vitrage comprenant la couche de luminophore.

## Patentansprüche

1. Thermoplastische Folie zur Herstellung einer transparenten Kraftfahrzeug- oder Gebäudeverglasung, die zur Visualisierung von Informationen bestimmt ist, insbesondere einer Verbundverglasung, wobei die Folie **dadurch gekennzeichnet ist, dass** sie eine Verbindung mit einem Absorptionsband im Ultraviolettbereich aufweist,
wobei das diffuse Reflexionsspektrum als Funktion der Energie der Strahlung, die auf die Verbindung einfällt,
durch einen Wert V auf der Reflexionskurve gekennzeichnet ist, der durch den Schnittpunkt zwischen der Tangente (1) am Inflexionspunkt der Kurve und ihrer Asymptote (2) bei erhöhten Energien zwischen 3,06 eV und 3,65 eV bestimmt wird, wobei die Asymptote bei erhöhten Energien die Tangente zur Reflexionskurve für Energiewerte ist, welche weit größer sind als der Wert V, und für welche die Reflexion im Wesentlichen ihr Minimum erreicht,
wobei das thermoplastische Material ausgewählt ist aus der Gruppe von PVB, plastifiziertem PVC, Polyurethan PU oder Ethylenvinylacetat EVA,
wobei die Folie außerdem ein Leuchtstoffmaterial umfasst, das in der Folie integriert ist, wobei der Leuchtstoff einfallende Exzitationsstrahlungen absorbiert, die zwischen 300 und 420 emittiert werden, und nach der Exzitation wieder eine Strahlung im sichtbaren Bereich abgibt,
wobei das diffuse Reflexionsspektrum direkt an kommerziellen Pulvern der Verbindung unter Verwendung eines Spektrophotometers Cary Varian 5G gemessen wird, das mit einer Integrationssphäre ausgestattet ist, die mit Spectralon bedeckt ist.

2. Thermoplastische Folie nach Anspruch 1, wobei der Wert V zwischen 3,14 und 3,50 eV beträgt.

3. Thermoplastische Folie nach einem der vorhergehenden Ansprüche, welche ein integriertes Absorptionsvermögen zwischen 310 und 340 nm von mehr als 98 %, vorzugsweise mehr als 99 %, aufweist.

4. Thermoplastische Folie nach einem der vorhergehenden Ansprüche, wobei das Kunststoffmaterial ein Polyvinylbutyral (PVB) ist.

5. Thermoplastische Folie nach einem der vorhergehenden Ansprüche, wobei die Verbindung ausgewählt ist aus der Gruppe bestehend aus: 2-Hydroxy-4-octyloxybenzophenon, N-(2-Ethoxyphenyl)-N'-(2-ethylphenyl)-ethandiamid, 2-(2H-Benzotriazol-2-yl)-p-kresol.

6. Thermoplastische Folie nach einem der vorhergehenden Ansprüche, mit einer Dicke zwischen 300 und 1600 Mikrometer, vorzugsweise zwischen 300 und 800 Mikrometer.

7. Thermoplastische Folie nach dem vorhergehenden Anspruch, wobei der Leuchtstoff ein Hydroxyterephthalat ist.

8. Thermoplastische Folie nach dem vorhergehenden Anspruch, wobei der Leuchtstoff ein Hydroxyalkylterephthalat ROOC-Φ(OH)ₓ-COOR mit der entwickelten Formel ist: 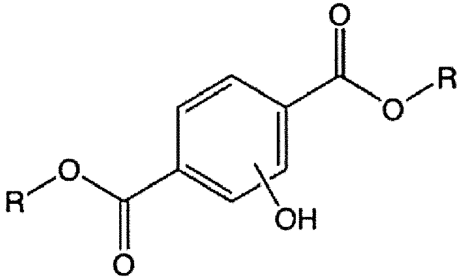 wobei Φ einen Benzolkern, substituiert durch mindestens eine Hydroxygruppe (OH), darstellt, R eine Kohlenwasserstoffkette mit 1 bis 10 Kohlenstoffatomen ist, und x gleich 1 oder 2 ist.

9. Thermoplastische Folie nach dem vorhergehenden Anspruch, wobei der Leuchtstoff ein Dialkyl-2-5-dihydroxytherephthalat mit der entwickelten Formel ist:

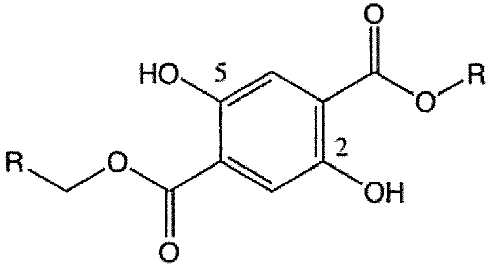

10. Thermoplastische Folie nach einem der vorhergehenden Ansprüche, außerdem umfassend ein Radikaldonator-Additiv H°.

11. Thermoplastische Folie nach dem vorhergehenden Anspruch, wobei das Radikaldonator-Additiv H° aus der Gruppe bestehend aus Phenylaminen, Diphenylaminen, Diaminen ausgewählt ist.

12. Verbundverglasung zur Visualisierung von Informationen vom Typ einer Windschutzscheibe für Kraftfahrzeuge oder einer Verglasung für ein Gebäude, umfassend eine Anordnung von mindestens zwei transparenten Folien aus anorganischem Glas oder einem widerstandsfähigen organischen Material, die miteinander durch eine Zwischenschicht verbunden sind, umfassend mindestens eine thermoplastische Folie nach einem der Ansprüche 1 bis 11.

13. Vorrichtung zur Visualisierung eines Bilds auf einer transparenten Verglasung, umfassend eine Verbundverglasung nach dem vorhergehenden Anspruch und eine Quelle zur Erzeugung von konzentrierter elektromagnetischer Strahlung vom Lasertyp, wobei die Strahlung zwischen 350 und 410 nm liegt, wobei die Strahlung zu der oder den Verglasungszonen gerichtet wird, welche die Leuchtstoffschicht umfassen.

## Claims

1. A thermoplastic sheet for the manufacture of a transparent motor vehicle or building glazing intended for the display of information, in particular a laminated glazing, said sheet being **characterised in that** it comprises a compound having an absorption band in the ultraviolet range, the diffuse reflection spectrum as a function of the energy of the incident radiation of said compound being **characterised by** a value V on the reflection curve, determined by the point of intersection between the tangent (1) at the inflection point of said curve and its asymptote (2) at higher energies, of between 3.06 and 3.65 eV, the asymptote at higher energies being the line tangent to the reflection curve for energy values much greater than the value V and for which the reflection substantially reaches its minimum,
wherein the thermoplastic material is selected from the group of PVBs, plasticised PVCs, polyurethane PU, or ethylene vinyl acetates EVAs, said sheet also comprising a luminophore material incorporated in said sheet, said luminophore absorbing incident excitation radiation emitted between 300 and 420 nm and releasing, after said excitation, radiation in the visible range, wherein the diffuse reflection spectrum is directly measured on commercial powders of the compound using a Cary Varian 5G spectrophotometer equipped with an integrating sphere covered with Spectralon.

2. The thermoplastic sheet according to claim 1, wherein the value V is between 3.14 and 3.50 eV.

3. The thermoplastic sheet according to either one of the preceding claims, exhibiting an integrated absorbance between 310 and 340 nm of greater than 98%, preferably greater than 99%.

4. The thermoplastic sheet according to any one of the preceding claims, wherein the plastics material is a polyvinyl butyral (PVB).

5. The thermoplastic sheet according to any one of the preceding claims, wherein said compound is selected from the group consisting of: 2-hydroxy-4-octyloxy benzophenone, ethanediamide N-(2-ethoxyphenyl)-N'-(2-ethylphenyl), and 2-(2H-benzotriazol-2-yl)-p-cresol.

6. The thermoplastic sheet according to any one of the preceding claims, with a thickness of between 300 and 1600 micrometres, preferably between 300 and 800 micrometres.

7. The thermoplastic sheet according to the preceding claim, wherein said luminophore is a hydroxyterephthalate.

8. The thermoplastic sheet according to the preceding claim, wherein said luminophore is an alkyl hydroxyterephthalate ROOC-Φ(OH)ₓ-COOR of expanded formula: 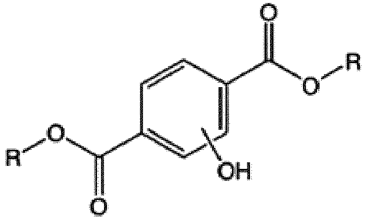 in which Φ denotes a benzene ring substituted by at least one hydroxy (OH) group, R is a hydrocarbon chain comprising from 1 to 10 carbon atoms, and x is equal to 1 or 2.

9. The thermoplastic sheet according to the preceding claim, wherein said luminophore is a dialkyl 2-5 dihydroxyterephthalate corresponding to the expanded formula:

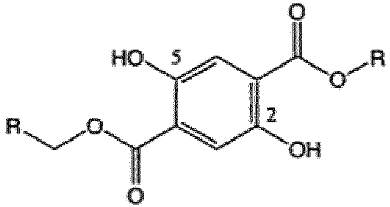

10. The thermoplastic sheet according to any one of the preceding claims, additionally comprising an H° radical-donating additive.

11. The thermoplastic sheet according to the preceding claim, wherein the H° radical-donating additive is selected from the group consisting of phenylamines, diphenylamines, and diamines.

12. A laminated glazing for the display of information, said glazing being provided in the form of a motor vehicle windshield or a building glazing, comprising an assembly of at least two transparent sheets of inorganic glass or of a resistant organic material which are connected to one another by an insert comprising at least one thermoplastic sheet according to any one of claims 1 to 11.

13. A device for displaying an image on a transparent glazing, comprising a laminated glazing according to the preceding claim and a generating source of concentrated electromagnetic radiation of the laser type, the radiation of which is between 350 and 410 nm, the radiation being directed towards the region or regions of the glazing comprising the luminophore layer.
